# FASCICULE DE BREVET EUROPEEN

(11) **EP 2 035 238 B1**
(45) Date de publication et mention de la délivrance du brevet: **09.01.2013**
(21) Numéro de dépôt: 06764715.6
(22) Date de dépôt: 31.05.2006
(51) Int. Cl.: B44B 5/00

(54) **DISPOSITIF DE MARQUAGE A DETECTION D'IMPACT ET PROCEDE CORRESPONDANT**
MARKIERVORRICHTUNG ZUR AUFPRALLERFASSUNG UND ENTSPRECHENDES VERFAHREN
MARKING DEVICE FOR IMPACT DETECTION AND CORRESPONDING PROCESS

(43) Date de publication de la demande: 18.03.2009
(73) Titulaire: Technomark, 42400 Saint Chamond (FR)
(72) Inventeur: BAUD, Laurent Albert Paul, 69006 Lyon (FR); JACOB, Stéphane Noël, 42800 Genilac (FR)
(74) Mandataire: Martin, Didier Roland Valéry
(86) Numéro de dépôt international: PCT/FR2006/001246
(87) Numéro de publication internationale: WO 2007/138173

(56) Documents cités:
- DE-A1- 2 827 711
- DE-U1- 29 518 137
- FR-A1- 2 801 238
- US-A- 4 142 238
- US-A- 4 511 977
- US-A1- 2002 114 653

## Description

### DOMAINE TECHNIQUE

La présente invention se rapporte au domaine technique des dispositifs et machines de marquage de pièces diverses à caractère généralement industriel, lesdits dispositifs étant à même de réaliser sur la surface de la pièce une série de signes alphanumériques ou de symboles indélébiles, notamment par déformation en creux de la matière par micro-percussion.

La présente invention concerne un dispositif de marquage de pièces par percussion comprenant un poinçon mobile destiné à percuter une pièce à marquer de manière à déformer cette dernière.

La présente invention concerne également un procédé de marquage de pièces par percussion au cours duquel un poinçon mobile vient percuter une pièce à marquer de manière à déformer cette dernière.

Ladite invention concerne enfin un programme informatique comprenant un moyen de code de programme informatique adapté pour exécuter les étapes d'un procédé de marquage lorsque ledit programme est exécuté sur un ordinateur.

### TECHNIQUE ANTERIEURE

Il existe de nombreux besoins en matière de gravage ou de marquage de pièces dans de multiples secteurs industriels, notamment afin d'assurer la gestion des flux de matières et la traçabilité des produits.

Ces besoins peuvent notamment varier en termes de dimensions, de forme et de nombre des caractères et/ou des symboles à marquer sur les pièces.

Il est notamment connu d'utiliser, pour répondre à ces besoins, des dispositifs de marquage par micro-percussion qui mettent en oeuvre une pointe vibrante, également appelée *« poinçon »* ou *« stylet »,* qui vient percuter la surface de la pièce afin d'y créer une succession de points en creux par déformation plastique locale de la matière.

En multipliant les impacts et en déplaçant le stylet par rapport à la surface de la pièce, il est ainsi possible de tracer point par point des caractères ou des motifs indélébiles.

Généralement, de tels dispositifs de marquage par micro-percussion comprennent une tête de marquage au sein de laquelle est logé un poinçon mobile guidé en translation. Ladite tête de marquage est communément apte à se déplacer selon deux axes orthogonaux motorisés, de préférence sensiblement parallèlement à la surface de la pièce à marquer, le poinçon étant alors susceptible d'être mis en mouvement selon un axe normal audit plan.

Usuellement, la tête de marquage intègre également des moyens de propulsion aptes à projeter le poinçon vers la pièce à marquer de manière à ce que la pointe de celui-ci entre en collision avec la surface de cette dernière. De façon bien connue, les moyens de propulsion peuvent être formés par un électroaimant apte à déplacer un noyau mobile formant masselotte, lequel entraîne le stylet de manière à lui conférer une énergie cinétique suffisante pour permettre la déformation locale de la surface de la pièce sous l'effet de l'impact.

Les dispositifs de marquage par micro-percussion connus souffrent cependant d'inconvénients non négligeables.

Tout d'abord, les dispositifs de marquage par micro-percussion existants sont particulièrement sensibles à la courbure des pièces à marquer, aux irrégularités de surfaces de celles-ci, ou encore au positionnement desdites pièces par rapport à la tête de marquage. En effet, l'énergie cinétique du stylet au moment de l'impact, et par conséquent la profondeur, les dimensions et la lisibilité du point obtenu lors dudit impact, dépendent étroitement de la course du stylet, c'est-à-dire de la distance dite *« distance de travail »* qui sépare la pièce de la tête de marquage.

Cette forte dépendance de la qualité du marquage envers la distance de travail dégrade fréquemment la reproductibilité du processus de marquage, notamment entre les points d'impact successifs destinés à former un même caractère.

En particulier, dans le cas de pièces irrégulières ou bombées, l'irrégularité des points d'impact est susceptible de rendre le marquage incomplet, de mauvaise qualité voire illisible, ce qui peut s'avérer rédhibitoire dans le cas de marquages de précision destinés à être relus par des systèmes automatisés de lecture optique utilisant des caméras à reconnaissance de formes ou de caractères. La qualité du marquage est également critique lorsque celui-ci est destiné à réaliser un codage matriciel 2D permettant l'identification de pièces et/ou le stockage d'informations associées à celles-ci, tel que le codage Data Matrix ®.

Ensuite, du fait que les utilisateurs règlent généralement les équipements de marquage de l'art antérieur de manière empirique, assez approximative et relativement grossière, par rapport à un résultat moyen obtenu sur une pièce d'essai, il est fréquent que la puissance fournie pour propulser le stylet soit très différente de cette qui serait juste nécessaire et suffisante pour parvenir au résultat recherché. Dans le cas où ladite puissance est insuffisante, le marquage risque d'être insuffisamment prononcé, voire inexistant si le stylet n'a même pas la force d'atteindre la pièce.

De fait, le réflexe de l'opérateur consiste souvent à administrer une puissance de propulsion nettement supérieure à celle requise, afin de s'assurer d'une percussion effective de force suffisante. Il s'ensuit un certain gaspillage d'énergie, préjudiciable en particulier à l'autonomie des équipements de marquage portatifs, laquelle est limitée à la capacité de leur batterie. De plus, en cas de percussion trop violente par le stylet, la pièce est susceptible d'être endommagée, voire perforée. Enfin, la répétition d'impacts inutilement puissants tend à dégrader la longévité du stylet en fatiguant prématurément celui-ci.

On connaît par ailleurs, par le document US-A-4 511 917 (SCHUETT PELZ), un dispositif de marquage de pièces métalliques par percussion, capable de détecter un contact du poinçon contre la pièce métallique à marquer.

### EXPOSE DE L'INVENTION

Les objets assignés à l'invention visent par conséquent à porter remède aux inconvénients énumérés précédemment et à proposer un nouveau dispositif de marquage de pièces par percussion qui soit capable de réaliser des points de marquage de façon fiable et reproductive indépendamment de la distance de travail, de la forme des pièces à marquer et de la régularité des surfaces de celles-ci.

Un autre objet de l'invention vise à proposer un disposer de marquage qui permette une gestion fine et précise du stylet.

Un autre objet de l'invention vise à proposer un dispositif de marquage de conception particulièrement simple mettant en oeuvre un nombre minimal de pièces particulièrement bon marché.

Un autre objet de l'invention vise à proposer un dispositif de marquage dont la mise en oeuvre par l'opérateur soit particulièrement facile.

Un autre objet de l'invention vise à proposer un nouveau dispositif de marquage qui fiabilise et sécurise le processus de marquage et qui facilite les opérations de maintenance.

Un autre objet de l'invention vise à proposer un nouveau procédé de marquage de pièce par percussion qui soit particulièrement fiable, reproductible et robuste vis-à-vis des variations de distance de travail, des formes des pièces à marquer ou de la régularité de leur surfaces.

Un autre objet de l'invention vise à proposer un procédé de marquage qui permette de piloter finement et précisément le stylet afin d'optimiser la qualité du marquage.

Un autre objet de l'invention vise à proposer un procédé de marquage qui soit particulièrement rapide et économe en énergie.

Un autre objet de l'invention vise à proposer un procédé de marquage qui soit capable de corriger automatiquement ses dérives éventuelles sans perturber le rendu visuel du marquage.

Enfin, un autre objet de l'invention vise à proposer un programme informatique qui permette de fiabiliser le marquage de pièces et de simplifier la mise en oeuvre de celui-ci.

Les objets assignés à l'invention sont atteints à l'aide d'un dispositif de marquage de pièces par percussion comprenant un poinçon mobile destiné à percuter une pièce à marquer de manière à déformer cette dernière, caractérisé en ce que ledit dispositif comporte un moyen de détection d'impact capable de détecter un impact du poinçon contre ladite pièce à marquer, ainsi qu'un moyen de traitement relié fonctionnellement au moyen de détection pour évaluer la durée séparant l'instant de l'impact d'un instant d'origine prédéterminé antérieur à l'instant de l'impact.

Les objets assignés à l'invention sont également atteints à l'aide d'un procédé de marquage de pièces par percussion au cours duquel un poinçon mobile vient percuter une pièce à marquer de manière à déformer cette dernière, caractérisé en ce qu'il comporte une étape (a) de détection d'impact au cours de laquelle on détecte un impact du poinçon contre ladite pièce à marquer, ainsi qu'une étape (b) de traitement au cours de laquelle on évalue, en liaison avec l'étape (a), la durée qui sépare l'instant tᵢ de l'impact d'un instant d'origine t₀ prédéterminé antérieur à l'instant tᵢ de l'impact.

Les objets assignés à l'invention sont enfin atteints à l'aide d'un programme informatique comprenant un moyen de code de programme informatique adapté pour exécuter les étapes d'un procédé conforme à l'invention lorsque ledit programme est exécuté sur un ordinateur.

### DESCRIPTIF SOMMAIRE DES DESSINS

D'autres particularités et avantages de l'invention apparaîtront plus en détails à la lecture de la description qui suit, ainsi qu'à l'aide des dessins annexés, fournis à titre purement illustratifs et non limitatifs, parmi lesquels :
- La figure 1 illustre, selon une vue d'ensemble en perspective, un dispositif de marquage par percussion conforme à l'invention.
- La figure 2 illustre, selon une vue en coupe, une variante de réalisation d'une tête de marquage pouvant être mise en oeuvre au sein d'un dispositif de marquage conforme à l'invention.
- La figure 3 illustre, selon une vue en coupe, la tête de marquage de la figure 2 lorsque le poinçon mobile percute la pièce à marquer.
- La figure 4 illustre, selon une vue schématique, une variante d'organisation fonctionnelle de différents éléments constitutifs d'un dispositif de marquage conforme à l'invention.
- La figure 5 illustre, sous forme schématique, un graphique du courant électrique circulant, en fonction du temps, dans un moyen de propulsion électromagnétique du poinçon susceptible d'âtre mis en oeuvre au sein d'un dispositif conforme à l'invention.
- La figure 6 illustre, sous forme d'un logigramme, une variante de phase d'étalonnage pouvant être mise en oeuvre au cours d'un procédé de marquage conforme à l'invention.

### MEILLEURE MANIERE DE REALISER L'INVENTION

Le dispositif 1 de marquage de pièces conforme à l'invention est destiné à réaliser le marquage indélébile d'une pièce à marquer 2, notamment d'une pièce mécanique, par percussion.

De préférence, le dispositif 1 de marquage conforme à l'invention permet de réaliser un ou plusieurs points d'impact par déformation en creux de la surface de la pièce à marquer 2.

Ainsi, le dispositif 1 est notamment susceptible de réaliser, point par point, des caractères alphanumériques, des logos, des motifs ornementaux ou des symboles d'identification. Avantageusement, le dispositif 1 conforme à l'invention est particulièrement adapté pour la réalisation d'un marquage-codage matriciel en 2D, de type Data Matrix®.

A cet effet, le dispositif de marquage 1 conforme à l'invention comprend un poinçon 3 mobile destiné à percuter ladite pièce 2 de manière à déformer cette dernière, et, plus préférentiellement, de manière à déformer localement la surface de ladite pièce 2.

Selon une caractéristique importante de l'invention, ledit dispositif 1 comporte un moyen de détection d'impact 4 capable de détecter un impact du poinçon 3 contre la pièce 2.

Plus précisément, le moyen de détection d'impact 4 renseignera sur l'existence d'un impact effectif entre le poinçon 3 et la pièce 2, c'est-à-dire sur le fait que le poinçon est bien entré en contact physique avec la pièce.

Avantageusement, le moyen de détection d'impact 4 conforme à l'invention permettra notamment de détecter l'impact du poinçon mobile 3 contre la pièce 2 que ladite pièce 2 soit électriquement conductrice ou non.

Selon une autre caractéristique importante de l'invention, le dispositif 1 comporte également un moyen de traitement 5 relié fonctionnellement au moyen de détection 4 pour évaluer la durée séparant l'instant tᵢ de l'impact d'un instant d'origine t₀ prédéterminé antérieur à l'instant tᵢ de l'impact.

En d'autres termes, le moyen de traitement 5 est apte à situer dans un référentiel de temps librement choisi un éventuel impact du poinçon 3 contre la pièce 2, c'est-à-dire de renseigner, lorsqu'un impact a effectivement eu lieu et a été perçu par le moyen de détection 4, sur le moment auquel s'est produit cet événement.

L'évaluation de ladite durée peut notamment être réalisée par un chronométrage relatif déclenché à l'instant t₀ d'origine et arrêté à l'instant tᵢ de l'impact, ou par horodatage absolu de ces évènements à l'aide d'une horloge interne au dispositif 1.

De préférence, le moyen de traitement 5 est également apte à évaluer la distance parcourue par le poinçon 3 entre une première position qu'il occupe sensiblement à l'instant tᵢ de l'impact, et une seconde position qu'il occupait à un instant d'origine t₀ antérieur à l'instant tᵢ de l'impact.

En particulier, la présente invention peut également concerner, de manière indépendante, un dispositif de marquage 1 par percussion d'une pièce 2 comportant un moyen de détection d'impact 4 apte à détecter un impact du poinçon 3 contre ladite pièce 2, ainsi qu'un moyen de traitement 5 relié fonctionnellement au moyen de détection d'impact 4 pour évaluer la distance parcourue par le poinçon 3 entre une première position qu'il occupe sensiblement à l'instant tᵢ de l'impact, et une seconde position qu'il occupait à un instant d'origine t₀ antérieur à l'instant tᵢ de l'impact.

Dans ce qui suit, on qualifiera la première position occupée sensiblement à l'instant tᵢ de l'impact de *« position de contact* », et la position occupée à l'instant d'origine t₀ antérieur à l'instant tᵢ de l'impact de *« position d'origine* ». De façon préférentielle, le poinçon sera susceptible d'être animé d'un mouvement oscillant au cours duquel il passera alternativement d'une position d'origine correspondant au *« point haut »* de sa course, et dans laquelle ledit poinçon se trouve éloigné de la pièce 2, à une position de contact, correspondant au *« point bas »* de la course, dans laquelle il touche la pièce.

Toutefois, les positions d'origine et/ou de contact ne constitueront pas nécessairement des positions de butée ou d'équilibre pour le poinçon mobile 3.

Le dispositif 1 conforme à l'invention comprend également un moyen de propulsion 6 apte, lorsqu'il est activé, à provoquer le déplacement du poinçon 3.

Selon une variante de réalisation préférentielle, le moyen de traitement 5 est capable d'évaluer l'intervalle de temps Δt, dit *« temps de vol* », écoulé entre l'instant d'activation tₐ dudit moyen de propulsion 6 et l'instant tᵢ où le poinçon 3 entre en collision avec la pièce 2. En d'autres termes, l'instant d'origine t₀ correspond de préférence à l'instant d'activation tₐ du moyen de propulsion 6.

De façon particulièrement préférentielle, le moyen de propulsion 6 comporte un électroaimant 7, par exemple de type solénoïde, apte à imprimer un mouvement à un noyau mobile 8 qui se trouve en liaison cinématique avec le poinçon 3.

De préférence, le noyau mobile 8 est formé par une masselotte 9 sensiblement cylindrique qui se trouve en liaison souple ou rigide avec le poinçon 3 et qui permet avantageusement d'augmenter l'inertie de celui-ci et par conséquent l'énergie cinétique qu'il est possible de lui conférer. Avantageusement, l'utilisation d'une masselotte autorise l'emploi de poinçons fins, de petites dimensions, de faible masse et de géométrie simple, donc peu encombrants et relativement bon marché.

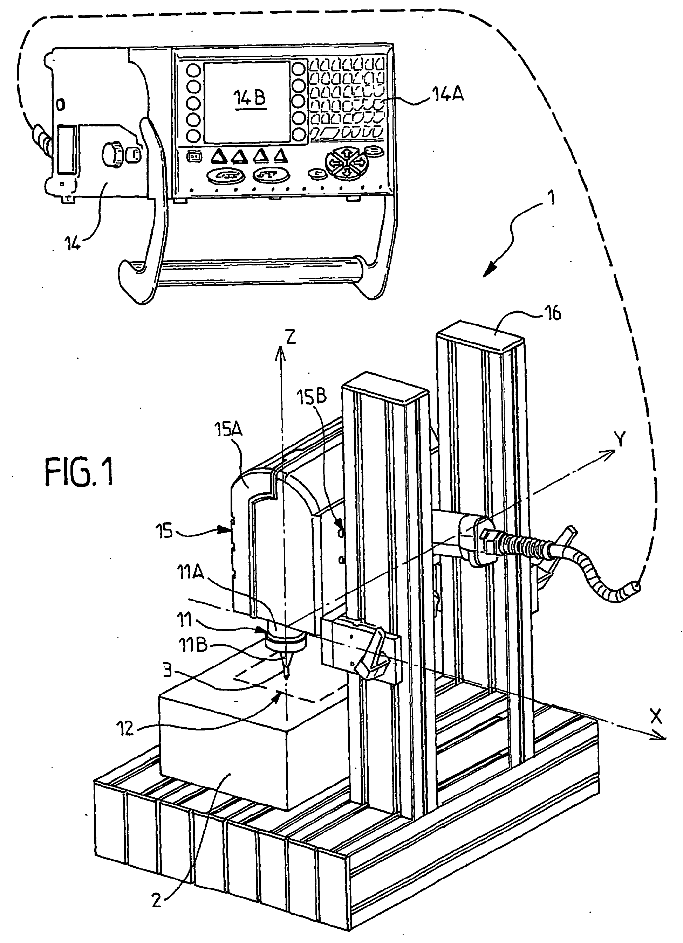

Selon une variante préférentielle de réalisation illustrée notamment sur les figures 1 à 3, le poinçon 3 est monté mobile en translation selon un axe Z, et de préférence guidé à l'aide de moyens de guidage en translation 10, au sein d'une tête de marquage 11.

La tête de marquage 11 peut avantageusement présenter une géométrie de révolution, en étant par exemple pourvue d'un corps cylindrique creux 11A comprenant un logement apte à recevoir le solénoïde 7 et se prolongeant par un embout tronconique 11B formant une buse, orientée vers la pièce 2, de laquelle peut jaillir le poinçon 3.

Ladite tête de marquage 11 est de préférence montée mobile en translation selon deux axes X et Y orthogonaux qui forment un plan (X, Y) sensiblement perpendiculaire à l'axe Z de translation du poinçon.

Avantageusement, la course de la tête de marquage 11 selon les axes X et Y délimite, dans un plan parallèle au plan (X, Y), une fenêtre de marquage 12 formée par la région de l'espace accessible au poinçon 3.

De préférence, le dispositif 1 est positionné par rapport à la pièce 2 de telle sorte que le plan (X, Y) soit sensiblement parallèle à la surface de ladite pièce 2 lorsque celle-ci est sensiblement plane, ou de telle sorte que la fenêtre de marquage parallèle au plan (X, Y) soit sensiblement tangente à la surface de ladite pièce 2 lorsque ladite surface est bombée.

Le positionnement et le déplacement de la tête de marquage 11 peuvent être motorisés et asservis par une unité de contrôle 14, de préférence déportée, qui permet notamment de déplacer le poinçon 3, entre deux impacts successifs, dans un plan sensiblement parallèle ou tangent à la surface de la pièce 2, en différents points de l'espace compris dans la fenêtre de marquage 12.

Selon une variante de réalisation, la tête de marquage 11 pourra également être mobile et asservie en position selon un troisième axe, de préférence sensiblement parallèle à l'axe Z de translation du poinçon 3.

De préférence, l'unité de contrôle 14 est pourvue d'une interface homme-machine, comprenant par exemple un clavier alphanumérique 14A et un écran d'affichage 14B, pour permettre à l'utilisateur de programmer et/ou contrôler le dispositif 1.

Avantageusement, la tête de marquage 11 et les moyens moteurs assurant son entraînement peuvent être intégrés pour former un sous-ensemble de marquage 15 distinct de l'unité de contrôle 14. Ledit sous-ensemble de marquage 15 peut notamment être pourvu d'un carter 15A et/ou encore de moyens de fixation 15B permettant soit l'intégration dudit sous-ensemble sur une ligne fixe de production, soit encore le montage dudit sous-ensemble sur une colonne 16 de hauteur réglable pour former un poste de marquage tel que cela est illustré sur la figure 1, soit enfin l'ajout audit sous-ensemble d'accessoires, par exemple d'une poignée en vue de son utilisation comme pistolet de marquage portatif.

Selon une variante de réalisation, une entretoise peut être interposée entre la pièce 2 et le sous-ensemble de marquage 15 de manière à maintenir une distance minimale prédéterminée entre la tête de marquage 11 et la pièce 2. Cette entretoise peut notamment se présenter sous la forme d'un cadre ajouré, éventuellement de hauteur réglable.

Par construction, la course du poinçon 3 est de préférence comprise entre une première et une seconde positions extrêmes, par exemple définies par des éléments de butée ou de retenue 18, tels que des épaulements, associés fonctionnellement aux moyens de guidage en translation 10 afin de limiter le débattement dudit poinçon 3 par rapport à la tête de marquage 11.

Ainsi, le dispositif 1 conforme à l'invention peut avantageusement disposer, grâce à un asservissement de la tête de marquage 11 et/ou grâce à l'utilisation d'une colonne 16, de moyens de réglage de la distance comprise entre la pièce 2 et l'une et/ou l'autre desdites première et seconde positions extrêmes.

Selon une variante de réalisation particulièrement préférentielle, le moyen de traitement 5 sera intégré dans l'unité de contrôle 14 et pourra commander le positionnement de la tête de marquage 11. En particulier, le moyen de traitement 5 pourra permettre de régler la distance de travail en asservissant la position de la tête de marquage 11 par rapport à la pièce 2 selon un axe sensiblement parallèle à l'axe Z.

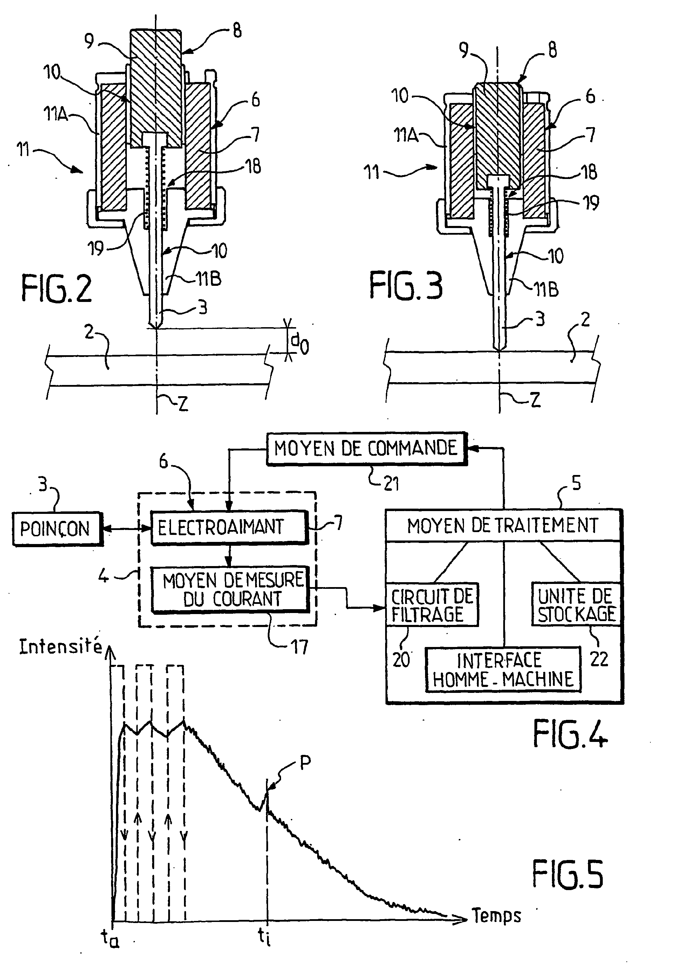

De préférence, le poinçon 3 possède une position de repos, située entre la première et la seconde position extrême, vers laquelle il tend à être spontanément rappelé, par exemple à l'aide d'un moyen de rappel élastique 19 de type ressort, tel que cela est illustré sur la figure 2. Avantageusement, cette position de repos peut correspondre à une position d'équilibre dans laquelle de poinçon 3 est rétracté au sein de la tête de marquage 11, c'est-à-dire se trouve en retrait par rapport à la pièce 2 lorsque les moyens de propulsion ne sont pas activés. Ainsi, le poinçon 3 est de préférence susceptible de s'écarter de ladite position de repos lorsqu'il est sollicité par les moyens de propulsion 6.

De façon particulièrement préférentielle, ladite position de repos constituera la position d'origine du poinçon 3, celui-ci se trouvant sensiblement dans cette position, avec une vitesse quasi-nulle par rapport à la tête de marquage 11, juste avant l'instant d'activation tₐ du moyen de propulsion 6.

Dans ce cas, on pourra avantageusement considérer que la distance d₀ qui sépare la pointe du poinçon 3 de la pièce 2 lorsque ledit poinçon 3 se trouve dans sa position de repos représente la distance de travail effective du dispositif 1.

Selon une caractéristique préférentielle de l'invention, le noyau mobile 8 et le poinçon 3 sont agencés de telle sorte qu'un impact du poinçon 3 contre la pièce 2 perturbe le mouvement du noyau mobile 8 et que cette perturbation du mouvement du noyau mobile 8 provoque l'apparition d'une force contre-électromotrice au niveau de l'électroaimant. Plus précisément, l'arrêt du poinçon 3 lors de sa collision avec la pièce 2 stoppe de préférence brutalement le déplacement du noyau mobile 8, cet arrêt du noyau mobile induisant une force contre-électromotrice au niveau de l'électroaimant 7.

De façon particulièrement avantageuse, l'électroaimant 7 servant à la propulsion du poinçon 3 forme ainsi un capteur inductif, sensible aux perturbations électriques P dues à un arrêt brutal dudit poinçon 3. En d'autres termes, selon une variante de réalisation préférentielle qui peut être considérée comme une invention à part entière, l'actionneur électromagnétique du poinçon 3 constitue également une partie du moyen de détection d'impact 4 au sein du dispositif de marquage par percussion. Une telle disposition constructive permet de simplifier considérablement le dispositif 1 et de gagner en compacité.

De préférence, le moyen de détection d'impact 4 comporte un moyen de mesure 17 de l'intensité du courant électrique qui circule dans l'électroaimant 7.

Le moyen de traitement 5, de préférence intégré dans l'unité de contrôle 14, comporte préférentiellement un circuit électrique de filtrage 20, relié audit moyen de mesure 17 de l'intensité, afin d'isoler précisément par rapport au courant électrique circulant dans l'électroaimant 7 la perturbation P, telle qu'une inversion dudit courant, qui est causée par la force contre-électromotrice provoquée par l'impact du poinçon 3 contre la pièce 2. Ledit circuit de filtrage 20 est de préférence pourvu à cet effet d'un filtre du second ordre.

Ainsi, le moyen de traitement est avantageusement apte à distinguer les effets d'une force contre-électromotrice induite très faible sur l'intensité du courant électrique qui traverse l'électro-aimant 7, notamment par rapport au bruit électronique et au courant résiduel qui s'éteint progressivement après la cessation de l'activation du moyen de propulsion 6, comme cela est illustré sur la figure 5.

De façon particulièrement avantageuse, le moyen de mesure 17 de l'intensité du courant électrique qui circule dans l'électroaimant 7 peut également permettre au moyen de traitement 5 de contrôler l'alimentation dudit électroaimant 7, et le cas échéant de réaliser un diagnostic de l'état du circuit d'induction en détectant un éventuel court-circuit ou au contraire une ouverture dudit circuit.

Selon une variante de réalisation préférentielle, le dispositif 1 conforme à l'invention comporte un moyen de commande 21 agencé pour appliquer une impulsion de courant à l'électroaimant 7, ledit moyen de commande 21 étant pourvu d'éléments de paramétrage permettant d'ajuster l'intensité et/ou la durée de ladite impulsion. De façon particulièrement préférentielle, ainsi que cela est représenté schématiquement en pointillés sur la figure 5, le moyen de commande 21 est apte à hacher une tension continue, sensiblement supérieure à la tension nominale de l'électroaimant 7, afin de réguler l'intensité du courant électrique qui circule dans l'électroaimant 7. Ainsi, il est notamment possible d'ajuster l'intensité de l'impulsion entre un niveau sensiblement nul et une valeur maximale prédéterminée Iₘₐₓ, l'élément de paramétrage correspondant pouvant par exemple proposer à l'utilisateur de choisir un pourcentage de ladite valeur Iₘₐₓ. En d'autres termes, le moyen de commande 21 est relié au moyen de propulsion 6 et apte à activer ce dernier tout en offrant la possibilité de définir la nature et la puissance de l'activation.

Selon une variante de réalisation préférentielle, le moyen de commande 21 est relié au moyen de traitement 5 de manière à ce que ce dernier puisse piloter l'électroaimant 7. Ainsi, le moyen de traitement 5 sera apte à paramétrer, exécuter et contrôler l'exécution de l'activation du moyen de propulsion 6.

Plus particulièrement, le moyen de traitement 5 sera susceptible de déclencher un impact-étalon, c'est-à-dire de provoquer l'excitation de l'électroaimant 7 à l'aide d'une impulsion de courant dite « *calibrée »* d'intensité et de durée prédéterminées.

Les valeurs d'intensité et de durée de ladite impulsion calibrée correspondant à un impact-étalon seront définies de préférence empiriquement de telle sorte que d'une part la puissance électrique fournie soit suffisante pour permettre au poinçon 3 de parcourir sensiblement l'ensemble de la course que lui autorisent les moyens de guidage en translation 10 et/ou les éléments de butée ou de retenue 18 au sein de la tête de marquage 11, et que d'autre part la durée de ladite impulsion soit suffisamment brève pour éviter que le courant d'excitation ne se prolonge jusqu'à, voir au-delà de, l'impact du poinçon 3 contre la pièce 2 et ne masque ainsi la perturbation P induite par la force contre-électromotrice au moment de l'impact. En d'autres termes, l'impulsion calibrée devra permettre d'une part la réalisation effective d'un impact, le poinçon 3 recevant suffisamment d'énergie pour atteindre la pièce (de préférence depuis sa position de repos), et d'autre part une détection efficace de l'impact, et ce, quelle que soit la distance de travail séparant la tête de marquage 11, et donc le poinçon 3, de la pièce 2 (dans la limite de la course maximale du poinçon bien entendu).

De préférence, la distance de travail minimale effective du dispositif 1 sera supérieure ou égale à 0,5 mm, et, de façon particulièrement préférentielle, supérieure à 0,8 mm.

Selon une caractéristique préférentielle de l'invention, le moyen de traitement 5 peut comprendre un moyen de corrélation (non représenté) du temps de vol Δt et de la distance parcourue par le poinçon. Plus précisément, le moyen de corrélation permettra de préférence de déterminer la longueur de la course effectuée par le poinçon entre l'instant d'activation tₐ du moyen de propulsion 6 et l'instant tᵢ où le poinçon entre en collision avec la pièce 2. Ainsi, il sera notamment possible d'obtenir une évaluation précise de la distance de travail effective à partir de la connaissance du temps de vol.

En pratique, ce moyen de corrélation pourra se fonder sur un ou plusieurs modèles mathématiques et/ou sur des abaques établissant une relation entre le temps de vol Δt et la distance parcourue par le poinçon 3. Avantageusement, de tels abaques pourront être établis par une succession d'essais au cours desquels on mesurera, pour différentes distances de travail connues, le temps écoulé entre l'excitation de l'électroaimant 7 par une impulsion calibrée et l'impact dudit poinçon 3 contre la pièce 2.

Selon une variante de réalisation particulièrement préférentielle, le moyen de traitement 5 est apte à évaluer l'énergie cinétique du poinçon 3 au moment de l'impact. Cette évaluation peut notamment être réalisée par l'application de formules mathématiques tirées de la mécanique cinématique, en connaissant la masse du poinçon 3 et celle de la masselotte 9, le temps de vol Δt du poinçon ainsi que la distance que ce dernier a parcourue jusqu'à l'impact.

Cette évaluation vise à déterminer l'énergie cinétique acquise par le poinçon 3 lors de sa mise en mouvement par le moyen de propulsion 6, laquelle dépend de la vitesse que possède ledit poinçon 3 juste avant que ce dernier ne percute la pièce 2. C'est en effet cette énergie cinétique qui va être au moins partiellement convertie en énergie de déformation pour fluer la matière de la pièce 2 sous la pointe du poinçon 3 à partir de l'instant tᵢ de l'impact.

Selon une variante de réalisation préférentielle, le moyen de traitement 5 comprend en outre une unité de stockage de données 22 permettant audit moyen de traitement 5 de mémoriser l'historique des données évaluées, mesurées, traitées et/ou transférées par lui lors d'impacts précédemment effectués. Cet historique peut naturellement être établi sur une ou plusieurs périodes de temps et/ou en fonction d'une quantité d'impacts réalisés, éventuellement définies par l'utilisateur.

Ainsi, le moyen de traitement 5 est susceptible d'enregistrer notamment le paramétrage du moyen de commande 21, les mesures d'intensité du courant traversant l'électroaimant 7 et/ou les résultats de chronométrage ou encore d'évaluation de la distance de travail ou de l'énergie cinétique réalisés consécutivement à un ou plusieurs impacts déjà effectués.

De préférence, le moyen de traitement 5 sera apte à appliquer, à tout ou partie des données de l'historique, un traitement statistique et sera capable d'effectuer une comparaison entre celles-ci, *via* le ou les résultats dudit traitement statistique, et les données issues d'un nouvel impact afin d'alerter l'utilisateur si une différence importante apparaît lors de ladite comparaison. En d'autres termes, le moyen de traitement 5 est susceptible d'extrapoler un ou plusieurs scénarii correspondant à l'usage habituel qui est fait du dispositif 1 et pourra signaler une rupture de continuité par rapport à ces scénarii. Ceci peut avantageusement permettre la détection d'une anomalie liée à une défaillance du dispositif 1 conforme à l'invention, ou encore d'une erreur de manipulation de l'utilisateur, par exemple lorsque ce dernier commet une erreur en programmant la consigne de l'impulsion d'excitation ou positionne la tête de marquage à une distance de travail incompatible avec le bon fonctionnement du dispositif 1. Ainsi le moyen de traitement 5 permet d'améliorer la sécurité de fonctionnement du dispositif 1.

Selon une variante de réalisation préférentielle de l'invention, le moyen de traitement 5 comprend un moyen d'apprentissage (non représenté) qui permet à l'utilisateur de mémoriser, par exemple dans l'unité de stockage de données 22, un ou plusieurs réglages particuliers correspondant à une énergie cinétique du poinçon 3 qui confère un rendu visuel du marquage jugé satisfaisant, ledit moyen de traitement 5 étant ensuite capable d'ajuster lui-même les éléments de paramétrage de l'impulsion d'excitation de l'électroaimant 7 de manière à reproduire cette énergie cinétique lors d'impacts ultérieurs.

En d'autres termes, le dispositif 1 conforme à l'invention est alors capable, à partir d'un réglage empiriquement établi par l'opérateur sur la base d'un ou plusieurs essais, d'asservir le processus de marquage selon un critère d'énergie d'impact constante. Ce mode de fonctionnement « à *énergie constante »* est particulièrement utile à la reproductibilité et à la constance du marquage, notamment lorsque la distance de travail est susceptible de varier, en fonction du point de la fenêtre de marquage 12 que l'on considère, du fait de la géométrie et/ou de la position dans laquelle ladite pièce se présente en regard de la tête de marquage 11.

De plus, comme cela sera détaillé ci-après, le moyen de traitement 5 peut être susceptible d'alterner d'une part des impacts de marquage *« en aveugle* », c'est-à-dire ne donnant pas lieu à une détection systématique d'impact, ou donnant lieu à un traitement restreint voire nul consécutivement à la détection d'impact, avec d'autre part des impacts-étalons afin de ré-étalonner régulièrement et automatiquement le dispositif 1 conforme à l'invention au fur et à mesure du marquage. Il est ainsi envisageable, par exemple, d'étalonner le dispositif dès qu'une distance prédéterminée a été parcoure par la tête de marquage 11, dans le plan (X, Y), au sein de la fenêtre de marquage 12. Ainsi, on peut limiter les effets sur le marquage de l'accroissement progressif de la distance de travail, au fur et à mesure du déplacement de la tête de marquage 11, lié à une pièce dont la surface est inclinée par rapport au plan (X, Y).

Selon une variante de réalisation de l'invention, le moyen de traitement 5 peut également être apte à réduire le temps de cycle nécessaire au marquage d'un caractère en déclenchant l'activation des moyens de propulsion 6 très rapidement après que le moyen de détection d'impact 4 a détecté l'impact effectif du poinçon 3 contre la pièce 2. Ainsi, selon ce mode de fonctionnement « à *vitesse optimale* », le moyen de traitement peut adapter sensiblement en temps réel l'asservissement du poinçon 3 au comportement effectif de ce dernier.

En d'autres termes, le dispositif 1 conforme à l'invention peut s'affranchir de la contrainte liée à l'application à chaque cycle de percussion, après chaque activation du moyen de propulsion 6, d'un temps de latence arbitraire fixe et particulièrement long censé couvrir le temps maximal que le poinçon 3 met à atteindre la pièce 2 puis à se réarmer, c'est-à-dire à regagner une position dans laquelle il peut de nouveau être normalement sollicité par le moyen de propulsion 6.

A titre d'exemple, il sera ainsi possible de raccourcir le délai entre les impacts successifs lorsque la distance de travail sera faible et, inversement, d'espacer temporellement les percussions lorsque la distance de travail augmente.

Par ailleurs, le moyen de traitement 5 peut être pourvu d'un moyen de diagnostic apte à vérifier si un impact du poinçon 3 contre la pièce 2 est effectivement détecté dans un laps de temps prédéterminé, à compter de l'instant tₐ l'activation du moyen de propulsion 6, et apte à signaler une anomalie lorsque aucun impact n'est détecté à l'échéance dudit laps de temps.

En particulier, la détection de ce type d'anomalie de fonctionnement peut avantageusement permettre la mise en évidence rapide d'une absence de pièce à marquer en vis-à-vis de la tête de marquage 11 ou encore d'une casse du poinçon 3.

Ainsi, le dispositif 1 conforme à l'invention peut-il présenter une ou plusieurs fonctions d'assistance active, notamment de surveillance de défauts et de conseil de paramétrage à l'attention de l'utilisateur.

Par ailleurs, afin de remplir tout ou partie des fonctions qui lui sont dévolues, le moyen de traitement 5 sera de préférence informatisé. A ce titre, il est remarquable que le support informatique du moyen de traitement 5, aussi bien matériel que logiciel, pourra avantageusement être intégré dans l'unité de contrôle 14 et/ou déporté sur un PC distinct de ladite unité de contrôle.

Un exemple de fonctionnement d'une variante de réalisation préférentielle d'un dispositif 1 conforme à l'invention va maintenant être décrit.

L'utilisateur du dispositif 1 peut tout d'abord configurer ledit dispositif selon la nature et les conditions du marquage à effectuer. En particulier, il peut rapporter le sous-ensemble de marquage 15 sur une ligne fixe de production pour traiter des pièces en série ou encore y fixer une poignée pour en faire un pistolet de marquage portatif utilisable manuellement sur des pièces de grandes dimensions.

L'utilisateur peut ensuite choisir, par l'intermédiaire de l'interface homme-machine de l'unité de contrôle 14, soit de mettre en oeuvre un programme établi antérieurement dans lequel sont mémorisés les différents paramètres d'un marquage qu'il souhaite reproduire à l'identique sur une pièce 2 de type connu, soit de paramétrer manuellement un nouveau marquage, soit d'effectuer un réglage-machine.

La réalisation d'un réglage-machine est notamment indiquée lorsqu'il est nécessaire de réaliser des essais de marquage pour adapter le processus à une nouvelle série de pièces mécaniques.

S'il choisit d'effectuer un réglage-machine, l'opérateur peut décider de réaliser un ou plusieurs impacts d'essai en spécifiant arbitrairement la durée et l'intensité des impulsions délivrées à l'électroaimant 6, et/ou éventuellement la distance de travail.

Après un ou plusieurs essais successifs au cours desquels ont été réalisées des séries de points d'impact correspondant chacune à des conditions particulières d'impulsions et/ou de distance de travail, l'opérateur sélectionne la série d'impacts qui lui paraît présenter le meilleur rendu visuel et indique au moyen de traitement 5, à l'aide du moyen d'apprentissage, qu'il doit mémoriser les paramètres correspondants dans l'unité de stockage 22.

L'opérateur peut ensuite sélectionner, si la fonction d'assistance est activée, un mode de fonctionnement qui lui paraît approprié. Plusieurs exemples non limitatifs de modes de fonctionnement susceptibles d'être mis en oeuvre au sein du dispositif 1 conforme à l'invention sont décrits ci-après.

Selon un premier mode de fonctionnement, « *à énergie constante »,* le moyen de traitement 5 peut vérifier périodiquement la distance effective de travail et ajuster le paramétrage de l'impulsion de manière à conférer au poinçon 3 une énergie cinétique sensiblement identique à chaque impact.

Selon un second mode de fonctionnement, « *à force maximale* », le moyen de traitement 5 peut vérifier périodiquement la distance effective de travail puis ajuster le paramétrage de l'impulsion afin d'obtenir, compte-tenu de la distance disponible, une énergie cinétique maximale du poinçon 3 lors de l'impact.

Selon un troisième mode de fonctionnement, « *à vitesse optimale* », le moyen de traitement 5 peut adapter la fréquence à laquelle il fait délivrer des impulsions d'excitation à l'électroaimant en fonction de la distance que doit parcourir le poinçon 3 pour atteindre la pièce et se réarmer, de manière à réduire le temps improductif du cycle de marquage et à obtenir une vitesse maximale d'exécution dudit marquage.

L'opérateur est toutefois libre de désactiver une ou plusieurs des fonctions d'assistance et de réaliser une série d'impacts selon des paramètres librement choisis par lui.

Lorsque l'opérateur déclenche le marquage, le moyen de traitement 5 applique au moyen de commande 21 les paramètres de durée et d'intensité retenus et lui donne l'ordre d'activer le moyen de propulsion 6, c'est-à-dire de délivrer une impulsion de courant à l'électroaimant 7.

Lorsque l'électroaimant 7 est excité par l'impulsion, il génère un champ magnétique qui agit sur la masselotte 9 en appliquant à celle-ci une force d'accélération. Dans son mouvement, la masselotte 9 entraîne le poinçon 3, jusqu'à ce que la pointe de ce dernier percute la surface de la pièce 2 ou jusqu'à ce que ledit poinçon 3 atteigne la limite de sa course au sein de la tête de marquage 11.

Lors d'un impact-étalon réalisé périodiquement, et de façon préférentielle et plus générale lors du fonctionnement normal du dispositif 1, la durée de l'impulsion est inférieure au temps de vol Δt, c'est-à-dire que l'excitation de l'électroaimant 7 est interrompue avant que le poinçon 3 ne percute la pièce 2. Du fait du caractère inductif de l'électroaimant 7, le courant électrique qui traverse ce dernier n'est pas brutalement interrompu mais décroît progressivement, après interruption de l'excitation, sous forme d'un courant résiduel.

Lorsque le poinçon 3 entre en collision avec la pièce 2, il stoppe brutalement le mouvement de la masselotte 9, c'est-à-dire du noyau mobile 8, ce qui génère par induction une force contre-électromotrice au niveau de l'électroaimant 7, laquelle crée une perturbation P du courant électrique résiduel qui décroissait, telle qu'une inversion.

Grâce au moyen de mesure 17 de l'intensité dudit courant, le moyen de détection d'impact 4 perçoit cette perturbation.

Le moyen de traitement 5, en filtrant le signal mesuré, isole le pic qui trahit cette perturbation P par rapport à la courbe de décroissance normale du courant résiduel et date cet événement.

Si aucun impact n'est détecté dans un laps de temps prédéterminé après l'activation du moyen de propulsion, le moyen de traitement 5 génère un signal d'alerte qui prévient l'utilisateur d'une anomalie.

Si un impact est détecté par le moyen de détection d'impact 4, le moyen de traitement 5 détermine le temps de vol Δt qui s'est écoulé entre l'instant tₐ d'application de l'impulsion excitatrice à l'électroaimant 7 et l'instant tᵢ de l'impact.

Sur la base des données fournies par un ou plusieurs abaques ou modèles mathématique, le moyen de traitement 5 détermine alors la distance parcourue par le poinçon pendant le temps de vol Δt.

A partir des données mesurées qui renseignent sur la distance effective de travail et sur le temps de vol du poinçon 3, le moyen de traitement 5 peut évaluer, en connaissant la masse mise en mouvement lors de la percussion, l'énergie cinétique du poinçon au moment de l'impact.

Si le premier mode de fonctionnement « *à énergie constante »* a été sélectionné, le moyen de traitement 5 peut ensuite comparer cette évaluation de l'énergie cinétique à l'historique des précédents impacts ou à la consigne mémorisée par l'utilisateur pour vérifier et si besoin ajuster en conséquence le paramétrage d'activation du moyen de propulsion 6.

Le cas échéant, le moyen de traitement 5 peut également être capable, en comparant le paramétrage de consigne issu du réglage-machine avec les évaluations du temps de vol, de la distance de travail et/ou de l'énergie cinétique au moment de l'impact, de suggérer à l'opérateur un paramétrage optimisé du dispositif 1, voire d'opérer une correction automatique du paramétrage (intensité d'impulsion, durée d'impulsion, et/ou distance de travail si celle-ci est asservie) et d'appliquer le paramétrage corrigé lors du ou des impacts suivants. Par exemple, il est envisageable qu'après un impact-étalon, le moyen de traitement propose à l'opérateur des paramètres d'impulsion plus adaptés à la distance de travail effective évaluée.

Le dispositif 1 conforme à l'invention peut également permettre de choisir la fréquence à laquelle il procède à une détection d'impact et aux différents traitements et vérifications qui s'ensuivent. En particulier, il est envisageable d'exécuter un impact-étalon après un nombre déterminé d'impacts réalisés en aveugle ou encore après que la tête de marquage 11 s'est déplacée dans le plan X-Y d'une distance prédéterminée.

Un procédé de marquage de pièce par percussion conforme à l'invention va maintenant être décrit en détails.

De façon préférentielle, ledit procédé pourra être mis en oeuvre à l'aide d'un dispositif de marquage tel que celui précédemment décrit. Toutefois, il est parfaitement envisageable d'appliquer ce procédé en utilisant un dispositif sensiblement différent de celui décrit qui utiliserait d'éventuels moyens alternatifs remplissant des fonctions équivalentes.

Au cours de ce procédé conforme à l'invention, un poinçon mobile 3 vient percuter la pièce 2 de manière à déformer cette dernière.

Selon une caractéristique importante de l'invention, ledit procédé comporte une étape (a) de détection d'impact au cours de laquelle on détecte un impact du poinçon 3 contre la pièce 2, ainsi qu'une étape (b) de traitement au cours de laquelle on évalue, en liaison avec l'étape (a), la durée qui sépare l'instant tᵢ de l'impact d'un instant d'origine t₀ prédéterminé antérieur à l'instant tᵢ de l'impact.

De préférence, ce procédé comprend une étape (c) au cours de laquelle on évalue la distance parcourue par le poinçon 3 entre une première position qu'il occupe sensiblement à l'instant tᵢ de l'impact, et une seconde position qu'il occupait à un instant d'origine t₀ antérieur à l'instant tᵢ de l'impact.

Pour permettre la détection de l'impact, le procédé conforme à l'invention comporte une étape (d), antérieure à l'étape (a) de détection de l'impact, au cours de laquelle on active un moyen de propulsion 6 afin de provoquer le déplacement du poinçon 3.

De préférence, ledit procédé comporte également une étape (e) au cours de laquelle on évalue l'intervalle de temps Δt, dit « *temps de vol* », écoulé entre l'instant d'activation tₐ dudit moyen de propulsion 6 et le moment où le poinçon 3 entre en collision avec la pièce 2.

Avantageusement, l'instant t₀ d'origine peut donc être fixé arbitrairement comme correspondant à l'instant d'activation tₐ du moyen de propulsion 6, l'étape (b) et l'étape (e) étant alors simultanées, voire confondues.

Le procédé conforme à l'invention peut également comporter une étape (f) au cours de laquelle on établit une corrélation, à l'aide d'un moyen de traitement 5, entre le temps de vol et la distance parcourue par le poinçon. De façon particulièrement préférentielle, l'étape (f) et l'étape (c) pourront être confondues, l'évaluation de la distance de travail effective s'effectuant à l'aide d'un abaque, à partir de la connaissance du temps de vol.

Avantageusement, le procédé conforme à l'invention peut également comporter une étape (g) au cours de laquelle on évalue l'énergie cinétique du poinçon 3 au moment de l'impact. Plus précisément, on pourra notamment évaluer la vitesse que possédait ledit poinçon juste avant qu'il n'entre en contact physique avec la pièce 2 et, en connaissant la masse en mouvement, laquelle dépend des masses du poinçon 3 et de la masselotte 9, évaluer l'énergie cinétique qu'il peut utiliser pour déformer la surface de la pièce 2 au moment de l'impact.

De façon particulièrement préférentielle, le procédé conforme à l'invention peut comporter une étape (h) au cours de laquelle on compare une ou plusieurs valeurs issues de la détection de l'impact, tel que le temps de vol, la distance parcourue par le poinçon 3, ou l'énergie cinétique de ce dernier au moment de l'impact, à des valeurs correspondantes provenant soit de consignes paramétrées par l'utilisateur, soit d'un traitement statistique de données antérieurement acquises lors d'impacts réalisés précédemment.

L'étape (h) peut notamment comprendre une sous-étape (h') de traitement informatique visant à établir les paramètres de l'impulsion en fonction du mode de fonctionnement choisi par l'utilisateur.

L'étape (h) peut également comprendre une sous-étape (h") de diagnostic permettant de vérifier que les valeurs issues de la détection d'impact sont cohérentes et, le cas échéant, d'alerter l'utilisateur d'une anomalie de fonctionnement. En particulier, lors de la sous-étape (h"), on pourra alerter l'utilisateur si aucune détection effective d'impact n'intervient dans un laps de temps prédéterminé à compter de l'activation du moyen de propulsion 6.

Le procédé conforme à l'invention peut également comporter une étape (i) d'ajustement au cours de laquelle on modifie les paramètres de mise en oeuvre du marquage, notamment les paramètres d'activation du moyen de propulsion 6 en fonction du ou des résultats de l'étape (h) de comparaison.

De façon particulièrement préférentielle, l'étape (i) d'ajustement est réalisée automatiquement par le moyen de traitement 5 qui corrige lui-même les valeurs de consignes d'intensité et/ou de durée d'impulsion applicables à l'électroaimant 7.

A titre d'exemple purement illustratif, si l'énergie cinétique évaluée après l'impact s'avère insuffisante et que la distance de travail est faible, le moyen de traitement 5 pourra augmenter la valeur de consigne de l'intensité de l'impulsion, sans modifier la durée de cette dernière. A l'inverse, si la distance de travail est suffisamment importante et le temps de vol relativement long, le moyen de traitement pourra augmenter la durée de l'impulsion sans en modifier l'intensité.

De préférence, l'étape (a) de détection d'impact, et/ou l'étape (b) de traitement, et/ou les étapes (c), (e), (f), (g), (h) et (i), n'interviennent pas systématiquement à chaque impact du poinçon contre la pièce, mais seulement ponctuellement, lors d'une phase spécifique (E) d'étalonnage du dispositif 1. Ladite phase d'étalonnage (E) alterne de préférence avec une ou plusieurs phases de marquage en aveugle (M) au cours desquelles on ne réalise pas l'étape (b) de traitement consécutif à la détection de l'impact, voire on ne met simplement pas en oeuvre l'étape (a) de détection de l'impact. Bien entendu l'absence d'étape (a) ou (b) rend caduques, pendant la durée de la phase de marquage en aveugle (M), les autres étapes conditionnées par l'obtention du ou des résultats desdites étape (a) et (b).

Ceci permet en particulier de surveiller périodiquement l'évolution du processus de marquage en comparant les données mesurées et évaluées lors de deux phases d'étalonnage (E) successives.

De façon préférentielle, les impacts réalisés lors d'une phase de marquage en aveugle utiliseront les paramètres applicables au moyen de propulsion 6 défini lors de l'étape d'étalonnage (E) qui précède immédiatement ladite phase de marquage en aveugle (M).

Ainsi, par exemple, si le moyen de traitement 5 constate que la distance de travail augmente au fur et à mesure du marquage, tandis que la durée de l'impulsion excitatrice est relativement longue, de telle sorte que le stylet 3 prend de plus en plus d'élan et acquiert une énergie cinétique de plus en plus élevée à chaque impact, le moyen de traitement 5 pourra limiter la durée de ladite impulsion pour normaliser l'énergie cinétique lors des impacts suivants.

De préférence, la phase (E) d'étalonnage comporte une sous-phase (E₁) au cours de laquelle on réalise un impact-étalon du poinçon 3 contre la pièce 2, plus précisément en activant le moyen de propulsion 6 dans des conditions particulières qui correspondent à celles d'un impact-étalon.

Comme cela a été défini plus haut, ces conditions particulières correspondent en particulier à un paramétrage spécifique de l'impulsion d'excitation de l'électroaimant 7.

De préférence, au cours de la sous-phase (E₁), on met en oeuvre l'étape (a) de détection d'impact et l'étape (b) de traitement lors de la réalisation dudit impact-étalon. De façon particulièrement préférentielle, la sous-phase (E1) mettra en oeuvre une séquence regroupant les étapes (d), (a), (b), (e), (f), (g), et (h) exécutées dans cet ordre, l'étape (d) étant réalisée en utilisant les paramètres d'activation correspondant à un impact-étalon, c'est-à-dire une impulsion calibrée.

Toutefois, l'énergie cinétique conférée au poinçon 3 lors d'un impact-étalon peut différer notablement de l'énergie cinétique nécessaire à l'obtention d'un marquage jugé satisfaisant sur la pièce 2. Il est par conséquent nécessaire, pour que l'étalonnage ne perturbe pas la constance du marquage, de corriger les effets dudit impact-étalon. De préférence, l'impact-étalon sera paramétré de sorte à conférer une énergie relativement faible au poinçon 3, si bien qu'il sera possible de rattraper le marquage en percutant la pièce 2 avec le poinçon 3 une seconde fois sensiblement au même endroit pour augmenter la profondeur du point initialement formé par l'impact-étalon à concurrence d'une profondeur identique à celle des points de marquage voisins.

Pour ce faire, la phase d'étalonnage (E) comporte avantageusement une sous-phase (E₂) au cours de laquelle on réalise un impact de compensation, sensiblement au même endroit que l'impact-étalon. Ainsi, on corrige la profondeur du marquage résultant dudit impact-étalon, de sorte que ladite profondeur corresponde sensiblement à celle des marquages voisins obtenus lors des phases de marquage en aveugle (M). Il est ainsi possible d'éviter l'apparition de défauts d'aspect visuel dans le marquage dû à l'étalonnage du dispositif 1.

Après la phase (E₂), on peut réaliser l'étape (i) d'ajustement, sur la base de la comparaison effectuée lors de l'étape (h) de la phase (E₁) précédant immédiatement (E₂), de manière à initialiser une nouvelle phase de marquage en aveugle (M) sur la base de paramètres corrigés.

Bien entendu, il pourrait être envisageable de réaliser l'ensemble des points de marquage à l'aide d'un couple impact-étalon/impact de compensation. Toutefois, dans la mesure ou un étalonnage périodique suffit généralement à garantir une excellente qualité de marquage, une surabondance des vérifications représentant un surcoût de temps et d'énergie n'est pas forcément justifiée.

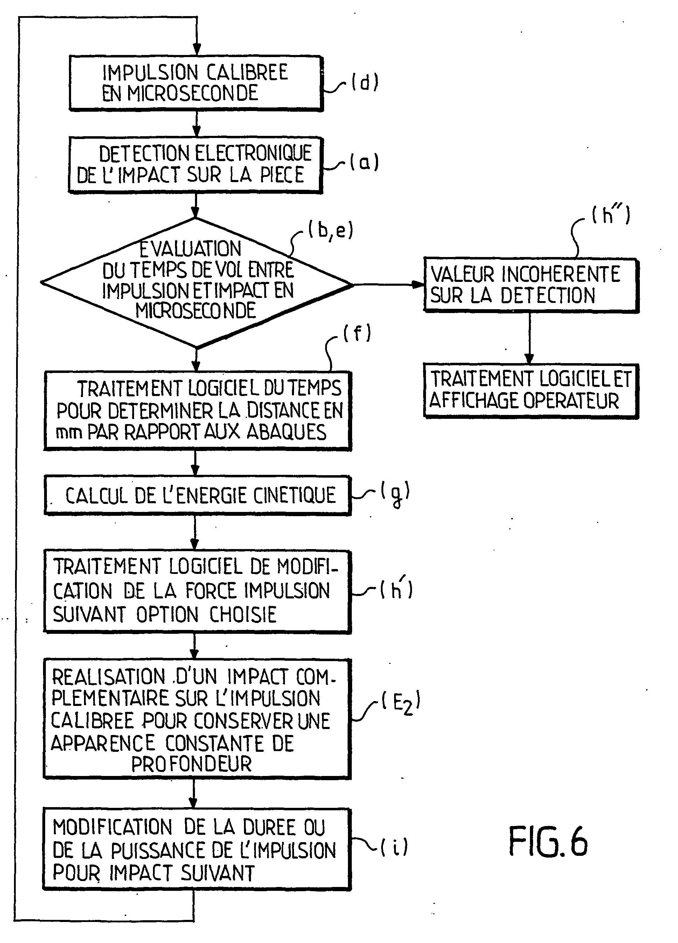

Un exemple non limitatif d'une phase d'étalonnage (E) conforme à l'invention est illustré sur la figure 6.

Par ailleurs, pour simplifier et accélérer les opérations de détection d'impact et de traitement des données en résultant, le moyen de traitement 5 peut avantageusement être informatisé et mettre en oeuvre un ou plusieurs programmes informatiques qui permettent l'exécution des différentes fonctions décrites ci-dessus.

La présente invention concerne donc également un programme informatique comprenant un moyen de code de programme informatique adapté pour exécuter les étapes d'un procédé conforme à ce qui était décrit ci-dessus lorsque ledit programme est exécuté sur un ordinateur.

Par *« ordinateur »,* on entend notamment tout circuit électronique programmable permettant un contrôle, éventuellement à distance, du dispositif 1 et du processus de marquage, que ledit circuit soit intégré dans l'unité de contrôle 14 ou qu'il constitue un ordinateur de type automate industriel ou PC.

Bien entendu, la présente invention s'étend à la mise en oeuvre dudit programme informatique sur un support lisible par un ordinateur, et à un support pouvant être lu par un ordinateur et sur lequel est enregistré ledit programme.

De façon particulièrement avantageuse, le dispositif 1 de marquage par percussion conforme à l'invention permet donc une gestion particulièrement fine du procédé de marquage et peut offrir à l'utilisateur des fonctions d'assistance « *intelligente »* au marquage.

Avantageusement, la vérification de l'existence d'un impact effectif du poinçon contre la pièce ainsi que la caractérisation du comportement effectif du poinçon permet d'asservir et de fiabiliser le processus de marquage en garantissant sa reproductibilité et la lisibilité des impacts tout en optimisant le temps de cycle.

De façon particulièrement avantageuse, les informations retirées d'un tel asservissement par détection d'impact mettent également à disposition de l'utilisateur des outils de diagnostic permettant de signaler rapidement une anomalie de fonctionnement dans le déroulement du processus de marquage. Ce diagnostic précoce permet avantageusement de limiter, le cas échéant, la quantité de pièces à reprendre ou à rebuter du fait d'un marquage défaillant, et/ou de réduire le temps d'immobilisation nécessaire à la maintenance du dispositif de marquage ou de l'équipement de production auquel il est associé.

### POSSIBILITE D'APPLICATION INDUSTRIELLE

La présente invention trouve son application industrielle dans la fabrication et la mise en oeuvre de dispositifs de marquage de pièces.

## Revendications

1. Dispositif de marquage (1) de pièces par percussion comprenant un poinçon mobile (3) destiné à percuter une pièce à marquer (2) de manière à déformer cette dernière, ledit dispositif comportant un moyen de détection d'impact (4) capable de détecter un impact du poinçon (3) contre ladite pièce à marquer (2), ledit dispositif étant **caractérisé en ce qu'**il comporte un moyen de traitement (5) relié fonctionnellement au moyen de détection d'impact (4) pour évaluer la durée séparant l'instant (tᵢ) de l'impact d'un instant d'origine (t₀) prédéterminé antérieur à l'instant (tᵢ) de l'impact.

2. Dispositif selon la revendication 1 **caractérisé en ce que** le moyen de traitement (5) est apte à évaluer la distance parcourue par le poinçon (3) entre une première position qu'il occupe sensiblement à l'instant (tᵢ) de l'impact, et une seconde position qu'il occupait à l'instant d'origine (t₀) antérieur à l'instant de l'impact.

3. Dispositif selon l'une des revendications 1 ou 2 **caractérisé en ce qu'**il comprend un moyen de propulsion (6) apte, lorsqu'il est activé, à provoquer le déplacement du poinçon (3) et **en ce que** le moyen de traitement (5) est capable d'évaluer l'intervalle de temps (Δt), dit « *temps de vol* », écoulé entre l'instant d'activation dudit moyen de propulsion (6) et l'instant où le poinçon (3) entre en collision avec la pièce (2).

4. Dispositif selon la revendication 3 **caractérisé en ce que** le moyen de traitement comprend un moyen de corrélation du temps de vol (Δt) et de la distance parcourue par le poinçon (3).

5. Dispositif selon l'une des revendications précédentes **caractérisé en ce qu'**il comprend un actionneur électromagnétique servant à la propulsion
du poinçon (3), de préférence un électroaimant (7), ledit actionneur électromagnétique formant également un capteur inductif sensible aux perturbations électriques (P) dues à la collision du poinçon (3) avec la pièce (2) et constituant une partie du moyen de détection d'impact (4).

6. Dispositif selon l'une des revendications précédentes **caractérisé en ce que** le moyen de traitement (5) est apte à évaluer l'énergie cinétique du poinçon (3) au moment de l'impact.

7. Dispositif selon la revendication 6 **caractérisé en ce qu'**il comprend un moyen de propulsion (6) comportant un électro-aimant (7) servant à propulser le poinçon (3) et **en ce que** le moyen de traitement (5) comprend un moyen d'apprentissage permettant à l'utilisateur de mémoriser un ou plusieurs réglages correspondant à une énergie cinétique du poinçon (3) qui confère un rendu visuel du marquage jugé satisfaisant, ledit moyen de traitement (5) étant ensuite capable d'ajuster lui-même les éléments de paramétrage de l'impulsion d'excitation de l'électroaimant (7) de manière à reproduire cette énergie cinétique lors d'impacts ultérieurs.

8. Dispositif selon l'une des revendications précédentes **caractérisé en ce que** le moyen de traitement (5) comprend une unité de stockage de données (22) permettant audit moyen de traitement (5) de mémoriser l'historique des données déterminées, mesurées, traitées et/ou transférées par lui lors d'impacts précédemment effectués et **en ce que** ledit moyen de traitement (5) est apte à appliquer à tout ou partie des données de l'historique un traitement statistique et est capable d'effectuer une comparaison entre celles-ci et les données issues d'un nouvel impact afin d'alerter l'utilisateur si une différence importante apparaît lors de ladite comparaison.

9. Procédé de marquage de pièces par percussion au cours duquel un poinçon mobile (3) vient percuter un pièce à marquer (2) de manière à déformer cette dernière, ledit procédé comportant une étape (a) de détection d'impact au cours de laquelle on détecte un impact du poinçon (3) contre ladite pièce à marquer (2), ledit procédé étant **caractérisé en ce qu'**il comporte une étape (b) de traitement au cours de laquelle on évalue, en liaison avec l'étape (a), la durée qui sépare l'instant (tᵢ) de l'impact d'un in tant d'origine (t₀) prédéterminé antérieur à l'instant (tᵢ) de l'impact.

10. Procédé selon la revendication 9 **caractérisé en ce qu'**il comprend une étape (c) au cours de laquelle on évalue la distance parcourue par le poinçon (3) entre une première position qu'il occupe sensiblement au moment de l'impact, et une seconde position qu'il occupait à un instant d'origine antérieur à l'instant de l'impact.

11. Procédé selon la revendication 9 ou 10 **caractérisé en ce qu'**il comporte une étape (d), antérieure à l'étape (a) de détection de l'impact, au cours de laquelle on active un moyen de propulsion (6) afin de provoquer le déplacement du poinçon (3), ainsi qu'une étape (e) au cours de laquelle on évalue l'intervalle de temps (Δt), dit « *temps de vol* », écoulé entre l'instant d'activation dudit moyen de propulsion et l'instant où le poinçon entre en collision avec la pièce.

12. Procédé selon l'une des revendications 9 à 11 **caractérisé en ce qu'**il comporte une étape au cours de laquelle on évalue la vitesse que possédait le poinçon (3) juste avant d'entrer en contact physique avec la pièce (2).

13. Procédé selon l'une des revendications 9 à 12 **caractérisé en ce qu'**il comporte une étape (g) au cours de laquelle on évalue l'énergie cinétique du poinçon (3) au moment de l'impact.

14. Procédé selon l'une des revendications 9 à 13 **caractérisé en ce qu'**il comprend une phase spécifique (E) d'étalonnage qui comporte une sous-phase (E₁) au cours de laquelle on met en oeuvre l'étape (a) de détection d'impact et l'étape (b) de traitement lors de la réalisation d'un impact-étalon du poinçon (3) contre la pièce (2), ainsi qu'une sous-phase (E₂) au cours de laquelle on réalise un impact de compensation, sensiblement au même endroit que l'impact-étalon, afin de corriger la profondeur du marquage résultant dudit impact-étalon.

15. Support pouvant être lu par un ordinateur et sur lequel est enregistré un programme informatique comprenant un moyen de code de programme informatique adapté pour exécuter les étapes d'un procédé conforme à l'une des revendications 9 à 14 lorsque ledit programme est exécuté sur un ordinateur.

## Claims

1. A device (1) for marking parts by percussion including a mobile punch (3) adapted to strike a part (2) to be marked so as to deform it, said device including impact detection means (4) capable of detecting impact of the punch (3) on said part (2) to be marked, said device being **characterized in that** it comprises a processor means (5) functionally connected to the impact detection means (4) to evaluate the time between the impact time (tᵢ) and a predetermined origin time (t₀) before the impact time (tᵢ).

2. A device according to claim 1, **characterized in that** the processor means (5) are adapted to evaluate the distance traveled by the punch (3) between a first position that it occupies substantially at the impact time (tᵢ) and a second position that it occupied at the origin time (t₀) prior to the impact time.

3. A device according to claim 1 or claim 2, **characterized in that** it includes propulsion means (6) adapted, when activated, to cause the punch (3) to move and the processor means (5) are capable of evaluating the "flight time" (Δt) between the time of activation of said propulsion means (6) and the time at which the punch (3) collides with the part (2).

4. A device according to claim 3, **characterized in that** the processor means include means for correlating the flight time (Δt) and the distance traveled by the punch (3).

5. A device according to any preceding claim, **characterized in that** said device includes an electromagnetic actuator for the propulsion of the punch (3), preferably an electromagnet (7), said electromagnetic actuator also forming an inductive sensor sensitive to electrical disturbances (P) caused by the impact of the punch (3) on the part (2) and forming part of the impact detection means (4)

6. A device according to any preceding claim, **characterized in that** the processor means (5) are adapted to evaluate the kinetic energy of the punch (3) at the time of the impact.

7. A device according to claim 6, **characterized in that** it includes a propulsion means (6) comprising an electromagnet (7) for the propulsion of the punch (3) and **in that** the processor means (5) include training means enabling the user to store one or more adjustments corresponding to a kinetic energy of the punch (3) that imparts a visual appearance of the marking deemed satisfactory, said processor means (5) then being able to adjust themselves the parameter setting elements for the excitation pulse of the electromagnet (7) to reproduce that kinetic energy on subsequent impacts.

8. A device according to any preceding claim, **characterized in that** the processor means (5) include a data storage unit (22) enabling said processor means (5) to store a record of data it determined, measured, processed and/or transferred at the time of previous impacts and **in that** said processor means (5) are adapted to apply statistical processing to some or all of the data of the record and are capable of effecting a comparison between said data and data in respect of a new impact in order to warn the user if a significant difference is apparent on said comparison.

9. A method of marking parts by percussion in which a mobile punch (3) strikes a part (2) to be marked in such a manner as to deform the part, said method including an impact detection step (a) in which impact of the punch (3) on said part (2) to be marked is detected, said method being **characterized in that** it comprises a processing step (b) in which, in connection with the step (a), the time between the impact time (tᵢ) and a predetermined origin time (t₀) before the impact time (tᵢ) is evaluated.

10. A method according to claim 9, **characterized in that** it includes a step (c) in which the distance traveled by the punch (3) between a first position that it occupies substantially at the impact time and a second position that it occupied at an origin time before the impact time is evaluated.

11. A method according to claim 9 or claim 10, **characterized in that** it includes a step (d) before the impact detection step (a) in which propulsion means (6) are activated to cause movement of the punch (3) and a step (e) in which the "flight time" (Δt) between the time of activation of said propulsion means and the time at which the punch collides with the part is evaluated.

12. A method according to anyone of claims 9 to 11 **characterized in that** it includes a step of evaluating the speed of the punch (3) just before it carries into physical contact with the part.

13. A method according to any one of claims 9 to 12, **characterized in that** it includes a step (g) in which the kinetic energy of the punch (3) at the time of the impact is evaluated.

14. A method according to any one of claims 9 to 13, **characterized in that** it includes a specific calibration stage (E) that includes a substage (E₁) in which the impact detection step (a) and the processing step (b) are executed during the execution of a calibration impact of the punch (3) on the part (2) and a substage (E₂) in which a compensation impact is effected at substantially the same place as the calibration impact in order to correct the depth of the marking resulting from said calibration impact.

15. A computer-readable medium on which is stored a program including a computer program code means adapted to execute the steps of a method according to any one of claims 9 to 14 when said program is executed on a computer.

## Patentansprüche

1. Vorrichtung zur Markierung (1) von Teilen durch Schlagen, die einen beweglichen Stempel (3) umfasst, der dazu vorgesehen ist, auf ein zu markierendes Teil (2) so aufzuschlagen, dass dieses letztere verformt wird, wobei die Vorrichtung ein Aufprallertassungsmittel (4) umfasst, das einen Aufprall des Stempels (3) auf dem zu markierenden Teil (2) erfassen kann, wobei die Vorrichtung **dadurch gekennzeichnet ist, dass** sie ein Verarbeitungsmittel (5) umfasst, das funktionstätig mit dem Aufprallerfassungsmittel (4) verbunden ist, um den Zeitraum einzuschätzen, der den Zeitpunkt (tᵢ) des Aufpralls von einem vorherbestimmten Ursprungszeitpunkt (t₀) vor dem Zeitpunkt (tᵢ) des Aufpralls trennt.

2. Vorrichtung nach Anspruch 1, **dadurch gekennzeichnet, dass** das Verarbeitungsmittel (1) dazu geeignet ist, die Strecke einzuschätzen, die der Stempel (3) zwischen einer ersten Position, die er im Wesentlichen zum Zeitpunkt (tᵢ) des Aufpralls einnimmt, und einer zweiten Position, die er zum Ursprungszeitpunkt (t₀) vor dem Zeitpunkt des Aufpralls belegte, zurückgelegt hat.

3. Vorrichtung nach einem der Ansprüche 1 oder 2, **dadurch gekennzeichnet, dass** sie ein Antriebsmittel (6) umfasst, das dazu geeignet ist, wenn es aktiviert ist, die Bewegung des Stempels (3) zu bewirken, und dass das Verarbeitungsmittel (5) die Zeitspanne (Δt), der so genannten *"Laufzeit",* einschätzen kann, die zwischen dem Zeitpunkt der Aktivierung des Antriebsmittels (6) und dem Zeitpunkt, zu dem der Stempel (3) mit dem Teil (2) zusammenprallt, vergeht.

4. Vorrichtung nach Anspruch 3, **dadurch gekennzeichnet, dass** das Verarbeitungsmittel ein Mittel zur Korrelation der Laufzeit (Δt) und der Strecke, die von dem Stempel (3) zurückgelegt wurde, umfasst.

5. Vorrichtung nach einem der vorhergehenden Ansprüche, **dadurch gekennzeichnet, dass** sie einen elektromagnetischen Aktor, der zum Antrieb des Stempels (3) dient, vorzugsweise einen Elektromagneten (7) umfasst, wobei der elektromagnetische Aktor auch einen induktiven Sensor bildet, der für elektrische Störungen (P) aufgrund des Zusammenpralls des Stempels (3) mit dem Teil (2) empfindlich ist und einen Teil des Aufprallerfassungsmittels (4) darstellt.

6. Vorrichtung nach einem der vorhergehenden Ansprüche, **dadurch gekennzeichnet, dass** das Verarbeitungsmittel (5) dazu geeignet ist, die kinetische Energie des Stempels (3) zum Moment des Aufpralls einzuschätzen.

7. Vorrichtung nach Anspruch 6, **dadurch gekennzeichnet, dass** sie ein Antriebsmittel (6) umfasst, das einen Elektromagneten (7) umfasst, der zum Antreiben des Stempels (3) dient, und dass das Verarbeitungsmittel (5) ein Lernmittel umfasst, das dem Benutzer ermöglicht, eine oder mehrere Einstellungen zu speichern, die einer kinetischen Energie des Stempels (3) entspricht bzw. entsprechen, die eine optische Wiedergabe der als zufrieden stellend beurteilten Markierung vermittelt, wobei das Verarbeitungsmittel (5) anschließend selbst die Elemente der Parametrierung des Erregungsimpulses des Elektromagneten (7) so einstellen kann, dass diese kinetische Energie bei späteren Aufprallen reproduziert wird.

8. Vorrichtung nach einem der vorhergehenden Ansprüche, **dadurch gekennzeichnet, dass** das Verarbeitungsmittel (5) eine Datenspeichereinheit (22) umfasst, die dem Verarbeitungsmittel (5) ermöglicht, den Verlauf von Daten zu speichern, die von diesem bei vorher durchgeführten Aufprallen bestimmt, gemessen, verarbeitet und/oder übertragen wurden, und dass das Verarbeitungsmittel (5) dazu geeignet ist, eine statistische Verarbeitung auf alle oder einen Teil der Daten des Verlaufs anzuwenden, und einen Vergleich zwischen diesen und den aus einem neuen Aufprall entstandenen Daten durchführen kann, um den Benutzer zu warnen, wenn bei dem Vergleich ein großer Unterschied auftritt.

9. Verfahren zur Markierung von Teilen durch Schlagen, wobei ein beweglicher Stempel (3) so auf ein zu markierendes Teil (2) aufschlägt, dass dieses letztere verformt wird, wobei das Verfahren einen Aufprallerfassungsschritt (a) umfasst, in dem ein Aufprall des Stempels (3) auf dem zu markierenden Teil (2) erfasst wird, wobei das Verfahren **dadurch gekennzeichnet ist, dass** es einen Verarbeitungsschritt (b) umfasst, in dem in Verbindung mit dem Schritt (a) der Zeitraum eingeschätzt wird, der den Zeitpunkt (tᵢ) des Aufpralls von einem vorherbestimmten Ursprungszeitpunkt (t₀) vor dem Zeitpunkt (tᵢ) des Aufpralls trennt.

10. Verfahren nach Anspruch 9, **dadurch gekennzeichnet, dass** es einen Schritt (c) umfasst, in dem die Strecke eingeschätzt wird, die der Stempel (3) zwischen einer ersten Position, die er im Wesentlichen zum Moment des Aufpralls einnimmt, und einer zweiten Position, die er zum Ursprungszeitpunkt vor dem Zeitpunkt des Aufpralls belegte, zurückgelegt hat.

11. Verfahren nach Anspruch 9 oder 10, **dadurch gekennzeichnet, dass** es einen Schritt (d) vor dem Aufprallerfassungsschritt (a), in dem ein Antriebsmittel (6) aktiviert wird, um die Bewegung des Stempels (3) zu bewirken, sowie einen Schritt (e) umfasst, in dem die Zeitspanne (Δt), die so genannte *"Laufzeit",* eingeschätzt wird, die zwischen dem Zeitpunkt der Aktivierung des Antriebsmittels und dem Zeitpunkt, zu dem der Stempel mit dem Teil zusammenprallt, vergeht.

12. Verfahren nach einem der Ansprüche 9 bis 11, **dadurch gekennzeichnet, dass** es einen Schritt umfasst, in dem die Geschwindigkeit eingeschätzt wird, über die der Stempel (3) verfügt, unmittelbar bevor er in physikalischen Kontakt mit dem Teil (2) kommt.

13. Verfahren nach einem der Ansprüche 9 bis 12, **dadurch gekennzeichnet, dass** es einen Schritt (g) umfasst, in dem die kinetische Energie des Stempels (3) zum Moment des Aufpralls eingeschätzt wird.

14. Verfahren nach einem der Ansprüche 9 bis 13, **dadurch gekennzeichnet, dass** eine spezifische Kalibrierungsphase (E) umfasst, die eine Unterphase (E₁), in der der Aufprallerfassungsschritt (a) und der Verarbeitungsschritt (b) bei der Ausführung eines Kalibrierungsaufpralls des Stempels (3) auf dem Teil (2) durchgeführt werden, sowie eine Unterphase (E₂) umfasst, in der ein Kompensationsaufprall, im Wesentlichen an derselben Stelle wie der Kalibrierungsaufprall ausgeführt wird, um die Tiefe der aus dem Kalibrierungsaufprall resultierenden Markierung zu korrigieren.

15. Träger, der von einem Computer gelesen werden kann und auf dem ein Computerprogramm aufgezeichnet ist, das ein Computerprogrammcodemittel umfasst, das dazu eingerichtet ist, die Schritte eines Verfahrens gemäß einem der Ansprüche 9 bis 14 auszuführen, wenn das Programm auf einem Computer ausgeführt wird.
